Europäisches Patentamt

**European Patent Office**

Office européen des brevets

(19)

(11) Publication number: **0 009 908**
**B1**

(12) **EUROPEAN PATENT SPECIFICATION**

(45) Date of publication of patent specification: **02.02.83**    (51) Int. Cl.³: **F 16 N 7/14**

(21) Application number: **79301922.5**

(22) Date of filing: **18.09.79**

(54) **Apparatus and method for pumping lubricant wicking material.**

(30) Priority: **28.09.78 US 946554**

(43) Date of publication of application:
**16.04.80 Bulletin 80/8**

(45) Publication of the grant of the patent:
**02.02.83 Bulletin 83/5**

(84) Designated Contracting States:
**BE DE FR GB IT**

(56) References cited:
**DE - A - 2 312 097**
**FR - A - 1 193 335**
**US - A - 3 765 575**

(73) Proprietor: **GENERAL ELECTRIC COMPANY**
**1 River Road**
**Schenectady New York 12305 (US)**

(72) Inventor: **Tomson, James Monroe**
**9829 Ernst Road**
**Fort Wayne Indiana 46809 (US)**
Inventor: **Bohde Jr, Richard Charles**
**1615 Sherbrooke Drive**
**New Haven Indiana 46774 (US)**

(74) Representative: **Sanders, Peter Colin Christopher et al,**
**BROOKES & MARTIN High Holborn House 52/54 High Holborn**
**London WC1V 6SE (GB)**

Courier Press, Leamington Spa, England.

## Apparatus and method for pumping
## lubricant wicking material

The present invention relates generally to moving compressible lubricant retaining and wicking material from a supply hopper to a metering head, and more particularly to pumping such material along a conduit.

Equipment for pumping and transmitting compressible, flowable lubricating and wicking material utilised in fractional horsepower motors has been developed over a number of years. For example, U.S. Patent 3,053,421 of September 11, 1962 illustrates an injection machine and includes details of a transmission that is utilised both for rotating an auger and stirring arm in a material supply hopper, and a material pumping mechanism. U.S. Patent 3,268,638 of August 23, 1966 on the other hand simply illustrates an auger feed and a separate pumping mechanism. Two other patents illustrate complete apparatus including transmission pumps and these patents are U.S. Patent 3,765,575 of October 16, 1973 and U.S. Patent 3,774,721 of November 27, 1973. German Patent Specification 2312097 discloses similar equipment but for supplying foamed thermoplastics material. A review of the above patents will indicate that relatively complex mechanisms have been developed and that apparently much concern has been shown regarding synchronization of parts and also concerning the resolution of problems associated with the use of a combination pump and transmission. Most notably, those problems have involved the contamination of the grease or lubrication in a transmission by the oil contained in the wicking material.

Commercially available equipment of the type described in the above patents has been used primarily in conjunction with flowable and extrudable wicking and lubricant storage materials. Typical materials are disclosed, for example, in U.S. Patent 2,966,459, and in our U.S. Patent 3,894,956.

A review of the above-referenced patents will indicate that one of the problems in the art is associated with contamination of lubricating grease in a transmission by lubricant oil that drips from the compressible lubricating and wicking material being pumped. In order to solve this problem, the prior art has attempted to utilise a combination transmission and pump having a relatively complex structure in order to avoid intermingling of the two different lubricant materials present in the equipment. Another problem that has been encountered in actual practice is that of maintenance and wear associated with the relatively complex gearing and timing mechanisms utilised in the prior art and commercially available equipment.

A review of the above-referenced prior art patents will also show the relative complexity of the combination transmission and pump arrangements and an apparent concern that accurate timing be maintained between a pumping mechanism itself and valve mechanisms that admit material into a pumping chamber.

Accordingly, it is an object of the present invention to provide an improved method and apparatus for pumping compressible lubricant retaining and wicking material from a supply chamber to a pressurised supply conduit which may be interconnected with any suitable metering head.

A more specific object of the present invention is to provide an improved method and apparatus for pumping such material whereby precise control and timing of valve means is avoided.

Still another object of the present invention is to provide an improved apparatus for pumping such material wherein the apparatus is easy to maintain, not of complex design, and economical to fabricate.

Another more specific object of the present invention is to provide an improved pumping apparatus for such material which can be readily interchanged with existing commercially available equipment either at the time of sale or in the field.

In accordance with one aspect of the present invention there is provided apparatus for pumping compressible lubricant retaining and wicking material from a pressurised source of supply, the apparatus comprising pressurising means for urging the said material under pressure toward a pump cavity; and means for pumping the material from the pump cavity, and a first prime mover energising the pressurising means to apply a continuous predetermined pressure to said material, the apparatus being characterised in that a second prime mover independent of the first prime mover simultaneously energises the pumping means such that the pressure in the cavity is alternately higher and lower than the said predetermined pressure, and passive pressure responsive valve means are interposed between the pressurising means and the pump cavity, the passive valve means permitting only unidirectional flow of material and alternately opening and closing in response to the difference in pressure between the pressure in the cavity and the said predetermined pressure.

In accordance with a further aspect of the present invention there is provided a method of pumping compressible lubricant retaining and wicking material from a source of supply to pump discharge means, the method comprising urging the said material under a substantially continuous predetermined pressure toward a pump cavity, and pumping the material from the cavity, characterised in that the said predetermined pressure is effected by a first prime mover in that a pressure which is alternately higher and lower than the said predetermined pressure is established in the pump cavity by the pumping of material by a second prime mover, and in that a passive pressure responsive valve means interposed in the supply to the cavity is closed when the said cavity pressure is higher than the said predetermined pressure and opened when the said cavity pressure is lower than the said predetermined pressure whereby the valve means permits only a unidirectional flow of the said material into the cavity.

In a preferred embodiment of the invention the pressurising means includes an auger (with or without stirring rods), and the pumping means comprises a reciprocating positive displacement pump. The passive pressure responsive valve means may, for example, comprise a single reed valve, or a double reed valve such as a double flapper valve. Preferably, a positive pressure is applied to one side of the passive valve means by the feed auger, and the other side of the valve means is exposed to an intermittently varying pressure produced by reciprocation of a piston that forms part of the positive displacement pump.

By way of example only, an embodiment of the invention will now be described with reference to the accompanying drawings in which:

Figure 1 is a front elevation, with parts removed, parts in section, and parts broken away, of apparatus embodying the invention;

Figure 2 is a top or plan view of the apparatus shown in Figure 1, assuming that the structure of Figure 1 were shown in full, but with some parts removed from Figure 2 in order to facilitate the description thereof; and

Figures 3 and 4 are enlarged fragmentary views of a portion of the structure shown in Figure 1 illustrating the automatic operation of a double flapper valve.

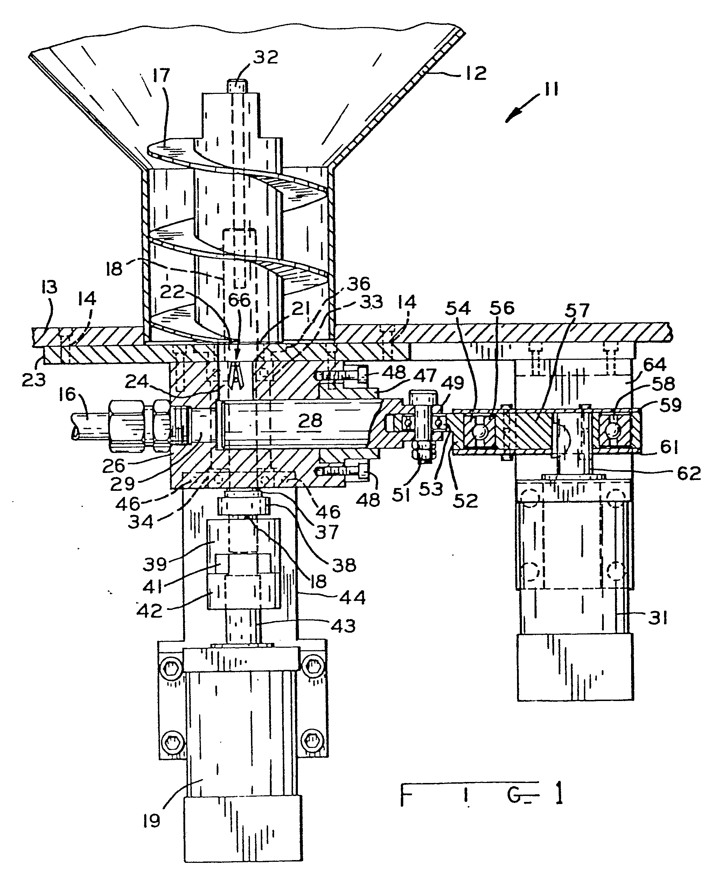

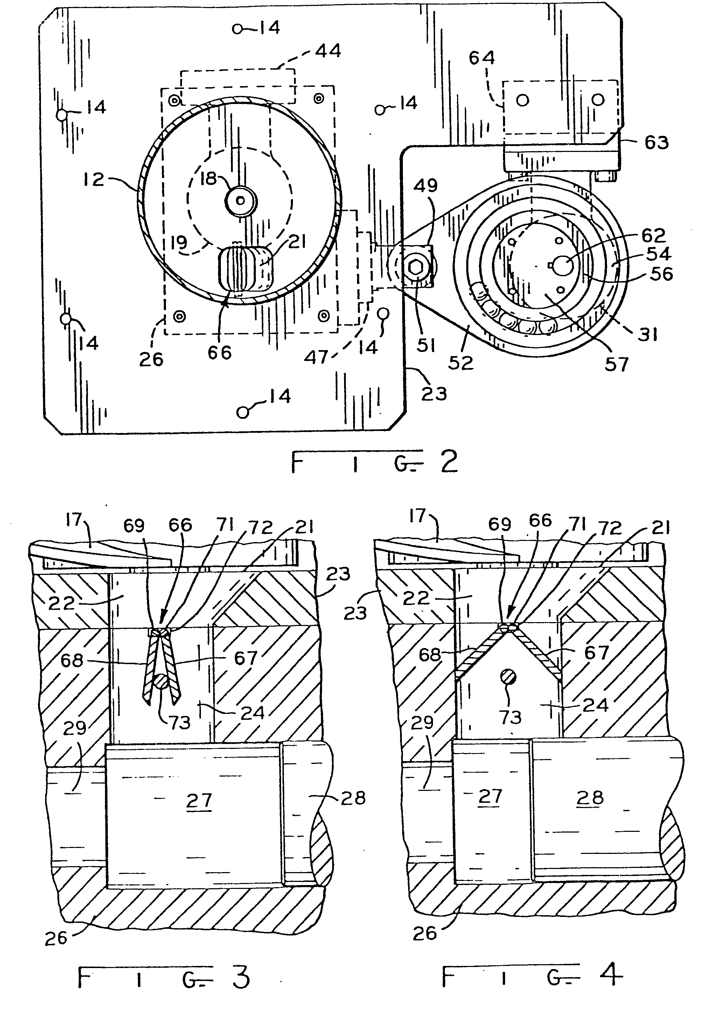

With specific reference to Figure 1 of the drawings, the apparatus 11 includes a frame 13 supporting a conventional hopper 12. An auger 17 is mounted on a shaft 18 which is driven by any suitable prime mover but which, in the case of the apparatus 11, has been illustrated as a hydraulic motor 19. An outlet opening 21 at the bottom of the hopper 12 overlies a feed or inlet opening 22 that is formed in a pump mounting plate 23. The inlet opening 22 in turn is in open communication with an inlet throat 24 of a pump body 26. The inlet throat 24 in turn is in open communication with a pumping chamber 27 which is best revealed in Figures 3 and 4. Disposed within the pumping chamber 27 is a reciprocating member illustrated as a piston 28 which alternately moves to and fro within the chamber. Because of this action, the material contained within hopper 12 is urged into the pumping chamber and then subsequently urged out of the chamber along an outlet port 29 and subsequently along the discharge conduit 16.

The auger 17 is continuously driven and is mounted on a shaft 18 and drivingly connected therewith by means of a cap screw 32. The shaft 18, in turn, is supported by a pair of ball bearings 33 34. Leakage of oil from the lubricant material handled in hopper 12 is prevented by using a seal and bearing retainer 34. As will be understood, the shaft 18 extends along a bore formed in the pump body 26, and a spacer 37 and clamp collar 38 cooperate to prevent the auger from rising in the hopper as it forces lubricating material downwardly into the outlet 21 of the hopper. The spacer 37 is used simply as a bearing surface against the bottom of the pump body 26. The lower end of the shaft 18 is fastened to a coupling half 39 which in turn is interconnected with a bronze coupling insert 41 to a lower coupling half 41. The lower coupling half 42 in turn is mounted on the shaft 43 of the motor 19. A mounting plate 44 for the motor 19 is fastened by screws 46 to the pump body 26.

As previously mentioned, the piston 28 is mounted for reciprocation within the pumping chamber 27. In order to prevent leakage of oil or wicking material from the chamber 27 around the piston 28, a rod seal 47 is screwed to the pump body 26 by screws 48. An inspection of Figure 1 will reveal that the driven end of the piston 28 is bifurcated at 49 and mounted by means of a shoulder screw 51 to a drive link 52. In order to minimize wear and maintenance, the screw 51 is carried by an inner race of a ball bearing 53, the outer race of which is carried in a bore formed in the link 52. The link 52 is driven by the motor 31 (which may for convenience be the same kind and type of motor as the motor 19). More specifically, the link 52 is provided with a large bore which accepts the outer race 54 of a ball bearing 58, the inner race 56 of which is pressed upon an eccentric 57. The eccentric 57 is readily revealed in Figure 2 and the bearing 58 is held trapped between the outer diameter of the eccentric 57 and the inner diameter of the link 52 by means of a pair of bearing retainers 59, 61 which are fastened together by nuts and bolts that extend through the bearing retainers as well as the eccentric 57. To facilitate an understanding of the structure involved, the upper bearing retainer 59 has been removed from the structure illustrated in Figure 2, but it will be understood that in practice, both the upper and lower bearing retainers are utilized. The eccentric 57 is keyed (as is readily apparent in both Figure 1 and Figure 2) and drivingly connected by means of a key with the shaft 62 of the motor 31. During operation, the motor 31 is actuated to thereby rotate the eccentric 57 about the axis of shaft 62. Since the link 52 is prevented from rotating because of its interconnection with the piston 28, the link 52 executes a reciprocating movement which causes the piston to be reciprocated back and forth within the pump chamber 27, all as will be understood by persons of ordinary skill in the art.

Any suitable mounting structure may be utilized in order to mount the motor 31 in the apparatus 11. However, for convenience, we mount the motor on a spacer plate 63 and to an L-shaped mounting bracket 64. The mounting bracket 64 in turn is mounted by bolts on the pump mounting plate 23.

With reference now to Figures 3 and 4, operation of the apparatus 11 will be described in somewhat more detail. Figure 3 illustrates the piston 28 in a position that it would be in during the intake of material into the pump chamber 27. During this time, the passive valve means disposed within the inlet throat 24 is open and permits material to flow downwardly from the hopper into the pump chamber. However, even though the auger within the hopper continues to urge material downwardly past the valve means, as the piston 28 begins to move to the left as viewed in Figure 3 sufficient pressure is applied to the material within the pump chamber and within the throat 24 to establish a positive pressure with respect to the pressure of the material being urged through the outlet 21 into the inlet opening 22. This pressure differential tends to cause a reverse flow of the material being handled with the result that the passive valve means closes and prevents a reverse or back flow of the material toward the hopper. Accordingly, as the piston 28 continues to move to the left as viewed in Figure 4, material in the pump chamber 27 is forced out of the outlet port 29. After the piston 28 is reached the end of its stroke (depicted for example in Figure 1), the piston begins to move to the right within the chamber 27. As the piston 28 moves to the right, it tends to create a negative pressure within the chamber 27 relative to the pressure of the material being urged downwardly from the hopper. As a result, the passive valve means in the inlet throat 24 opens (as revealed in Figure 3) and material once again flows downwardly into the expanding pump chamber 27.

The passive valve means in throat 24 consists of a double flapper valve 66 with flapper vanes 67, 68, each of which is brazed to a 2.38 mm diameter rod 69, 71. The two flapper assemblies (that each comprise a vane and rod) are dropped into a slot 72 formed at the entrance of the throat 24 in the pump body 26. Extending across the throat 24 and threaded into the pump body itself is a spacer screw 73 which is provided to ensure that the opening along throat 24 and along the vanes 67, 68 are convergent in the desired direction of material flow. Thus, as any back flow tends to be induced, the material will tend to be caught on the backside of the vanes 67, 68 and force the vanes into the closed valve condition illustrated in Figure 4.

It will be recalled that the auger 17 is continuously driven. We have found that the auger, even when being continuously driven, does not adversely affect the material contained within the hopper 12. Moreover, the pressure exerted by the auger is insufficient to provide an adequate and consistent flow of material along the conduit 16. It is because of this that an additional positive displacement pumping means (such as the piston and pumping chamber) is provided to ensure adequate material flow. The above described apparatus may be utilised for pumping either materials as described, for example, in the aforesaid U.S. Patent 3,894,956 or with the various materials that are marketed under the registered trade name "Permawick".

The hopper 12 with its frame 13 can be detached from the pump mounting plate 23, and the whole pump unit can therefore be detached as a complete unit from the outlet 16. The pump unit may therefore replace a commercially available combination transmission pump initially mounted on the plate 23 using mounting holes 14.

## Claims

1. Apparatus for pumping compressible lubricant retaining and wicking material from a pressurised source of supply, the apparatus comprising pressurising means (17) for urging the said material under pressure toward a pump cavity (27); means (28) for pumping the material from the pump cavity (27), and a first prime mover (19) energising the pressurising means (17) to apply a continuous predetermined pressure to said material, the apparatus being characterised in that a second prime mover (31) independent of the first prime mover (19) simultaneously energises the pumping means (28) such that the pressure in the cavity is alternately higher and lower than the said predetermined pressure, and passive pressure responsive valve means (66) are interposed between the pressurising means (17) and the pump cavity (27), the passive valve means (66) permitting only uni-directional flow of material and alternately opening and closing in response to the difference in pressure between the pressure in the cavity (27) and the said predetermined pressure.

2. Apparatus according to claim 1 wherein the pumping means comprises a reciprocating positive displacement pump, the alternating pressure in the pump cavity (27) being produced by reciprocation of a piston (28) forming part of the positive displacement pump.

3. The apparatus of claim 1 or claim 2 wherein the valve means comprises at least one vane (67, 68) pivotally mounted on the inlet side of the pump cavity (27), the vane being free to pivot to an open position as material flows in a forward direction toward the pump cavity, but pivoting to a closed position when impinged upon by material tending to flow in a reverse direction.

4. The apparatus of claim 3 wherein the valve means (66) comprises two pivotally mounted flow control vanes (67, 68).

5. The apparatus of claim 4 wherein each of the vanes (67, 68) is suspended from a respective supporting member (69, 71), and wherein means (73) are provided for maintaining a predetermined minimum separation of the vanes while they are in an open condition.

6. The apparatus of claim 1 wherein the pressurising means (17) includes an auger fed supply hopper.

7. A method of pumping compressible lubricant retaining and wicking material from a source of supply to pump discharge means, the method comprising urging the said material under a substantially continuous predetermined pressure toward a pump cavity (27), and pumping the material from the cavity, characterised in that the said predetermined pressure is effected by a first prime mover (19), in that a pressure which is alternately higher and lower than the said predetermined pressure is established in the pump cavity by the pumping of material, by a second prime mover (31) and in that a passive pressure responsive valve means (66) interposed in the supply to the cavity is closed when the said cavity pressure is higher than the said predetermined pressure and opened when the said cavity pressure is lower than the said predetermined pressure whereby the valve means permits only a unidirectional flow of the said material into the cavity.

## Patentansprüche

1. Einrichtung zum Pumpen eines kompressiblen Schmiermittelaufnahme- und Dochtmaterials aus einer Druckspeisequelle, mit Druckmitteln (17) zum Drücken des Materials unter Druck zu einer Pumpkammer (27), Mitteln (28) zum Pumpen des Materials aus der Pumpkammer (27) und einer ersten Antriebsmaschine (19) für die Druckmittel (17) zum Ausüben eines vorbestimmten Drucks auf das Material, dadurch gekennzeichnet, daß eine zweite Antriebsmaschine (31) unabhängig von der ersten Antriebsmaschine (19) gleichzeitig die Pumpmittel (28) antreibt, so daß der Druck in der Kammer abwechselnd höher und niedriger als der vorbestimmte Druck ist, und zwischen den Druckmitteln (17) und der Pumpkammer (27) passive, auf Druck ansprechende Ventilmittel (66) angeordnet sind, die eine Materialströmung in nur einer Richtung gestatten und auf die Druckdifferenz hin zwischen dem Druck in der Kammer (27) und dem vorbestimmten Druck abwechselnd öffnen und schließen.

2. Einrichtung nach Anspruch 1, dadurch gekennzeichnet, daß die Pumpmittel eine sich hin- und herbewegende Verdrängerpumpe aufweisen, wobei der abwechselnde Druck in der Pumpkammer (27) durch Hin- und Herbewegung eines Kolbens (28) erzeugt ist, der Teil der Verdrängerpumpe bildet.

3. Einrichtung nach Anspruch 1, dadurch gekennzeichnet, daß die Ventilmittel wenigstens eine Klappe (67, 68) aufweisen, die auf der Einlaßseite der Pumpkammer (27) schwenkbar angebracht ist, wobei die Klappe frei in eine Öffnungsstellung schwenkt, wenn das Material in Vorwärtsrichtung zur Pumpkammer strömt, aber in eine Schließposition schwenkt, wenn rückwärts strömendes Material auftrifft.

4. Einrichtung nach Anspruch 3, dadurch gekennzeichnet, daß die Ventilmittel (66) zwei schwenkbar angebrachte Strömungssteuerklappen (67, 68) aufweisen.

5. Einrichtung nach Anspruch 4, dadurch gekennzeichnet, daß jede Klappe (67, 68) von einem entsprechenden Halteteil (69, 71) herabhängt und Mittel (73) vorgesehen sind zur Aufrechterhaltung einer vorbestimmten minimalen Trennung der Klappen in deren geöffnetem Zustand.

6. Einrichtung nach Anspruch 1, dadurch gekennzeichnet, daß die Druckmittel (17) einen durch eine Schnecke gespeisten Vorsorgungstrichter aufweist.

7. Verfahren zum Pumpen eines kompressiblen Schmiermittelaufnahme- und Dochtmaterials von einer Speisequelle zu einem Pumpenausgang, wobei das Material unter einem im wesentlichen kontinuierlichen vorbestimmten Druck zu einer Pumpkammer (27) gedrückt und das Material aus der Kammer gepumpt wird, dadurch gekennzeichnet, daß der vorbestimmte Druck durch eine erste Antriebsmaschine (19) ausgeübt wird, daß der Druck, der abwechselnd höher und niedriger als der vorbestimmte Druck ist, in der Pumpkammer durch das Pumpen von Material durch eine zweite Antriebsmaschine (31) hergestellt wird und daß ein passives, auf Druck ansprechendes Ventilmittel (66), das in dem Versorgungseingang zur Kammer angeordnet ist, geschlossen, wenn der Kammerdruck höher als der vorbestimmte Druck ist, und geöffnet wird, wenn der Kammerdruck niedriger als der vorbestimmte Druck ist, wodurch das Ventilmittel eine nur in einer Richtung erfolgende Strömung des Materials in die Kammer gestattet.

## Revendications

1. Appareil pour le pompage de matériau compressible formant mèche à lubrifiant depuis une source d'alimentation sous pression, l'appareil comprenant un moyen de mise sous pression (17) pour pousser le matériau sous pression vers une cavité (27) de pompe; un moyen (28) pour pomper le matériau depuis la cavité de pompe (27), et une première source d'énergie (19) alimentant le moyen de mise sous pression (17) pour appliquer une pression continue prédéterminée du matériau, appareil caractérisé en ce qu'une seconde source d'énergie (31) indépendante de la première source d'énergie (19) alimente simultanément le moyen de pompage (28) de telle sorte que la pression dans la cavité est alternativement supérieure et inférieure à la pression prédéterminée, et un clapet passif sensible à la pression (66) est interposé entre le moyen de mise sous pression (17) et la cavité de pompe (27), ce clapet passif (66) permettant seulement un écoulement unidirectionnel du matériau et s'ouvrant et se fermant alternativement en réponse à la différence de pression entre la pression dans la cavité (27) et la pression prédéterminée.

2. Appareil selon la revendication 1, dans lequel le moyen de pompage comprend une pompe alternative à déplacement positif, la pression alternante dans la cavité (27) de la pompe étant produite par le mouvement alternatif d'un piston (28) faisant partie de la pompe à déplacement positif.

3. Appareil selon la revendication 1 ou 2, dans lequel le clapet comprend au moins un battant (67, 68) monté pour pivoter sur le côté intérieur de la cavité de pompe (27), le battant étant libre de pivoter vers une position ouverte lorsque le matériau s'écoule vers l'avant en direction de la cavité de la pompe, mais pivotant vers une position fermée lorsqu'il est frappé par du matériau tendant à s'écouler en sens inverse.

4. Appareil selon la revendication 3, dans lequel le clapet (66) comprend deux battants (67, 68) de commande d'écoulement montés pour pivoter.

5. Appareil selon la revendication 4, dans lequel chacun des battants (67, 68) est suspendu sur un organe de support respectif (69, 71), et dans lequel un moyen (73) est fourni pour maintenir un écart prédéterminé minimum entre les battants lorsqu'ils sont dans un état d'ouverture.

6. Appareil selon la revendication 1, dans lequel le moyen de mise sous pression (17) comprend une trémie d'alimentation à vis sans fin.

7. Procédé de pompage d'un matériau compressible formant mèche à lubrifiant depuis une source d'alimentation à des moyens de décharge de pompe, le procédé consistant à pousser le matériau sous une pression continue prédéterminée vers une cavité de pompe (17), et pomper ce matériau de la cavité, procédé caractérisé en ce que la pression prédéterminée est établie par une première source d'énergie (19), en ce qu'une pression alternativement supérieure et inférieure à la pression prédéterminée est établie dans la cavité de pompe par le pompage du matériau par une seconde source d'énergie (31), et en ce qu'un clapet passif sensible à la pression (66) interposé dans l'alimentation de la cavité est fermé lorsque la pression dans la cavité est supérieure à la pression prédéterminée et ouvert lorsque la pression dans la cavité est inférieure à la pression prédéterminée de sorte que le clapet permet seulement un écoulement unidirectionnel du matériau dans la cavité.

F I G 1

F I G 2

F I G 3

F I G 4